# EUROPEAN PATENT SPECIFICATION

(11) **EP 2 372 600 B1**
(45) Date of publication and mention of the grant of the patent: **24.10.2012**
(21) Application number: 11159100.4
(22) Date of filing: 22.03.2011
(51) Int. Cl.: G06K 7/00, G07C 9/00

(54) **Card reader with multiple position mounting support**
Kartenleser mit Montageplatte für mehrere Montagepositionen
Lecteur de cartes avec un support pour montage en plusieurs positions

(30) Priority: 22.03.2010 US 729141
(43) Date of publication of application: 05.10.2011
(73) Proprietor: ASSA ABLOY AB, 107 23 Stockholm (SE)
(72) Inventor: Padilla, Toby Mark, Lakewood, CO 80227 (US); Bousfield, Randall Dennis, Arvada, CO 80234 (US)
(74) Representative: Grosfillier, Philippe

(56) References cited:
- WO-A1-93/13498
- US-A- 5 756 978

## Description

### FIELD OF THE INVENTION

The present invention relates to access control devices and, more particularly, a mounting bracket for access control devices.

### BACKGROUND OF THE INVENTION

In access control systems, cards or Radio Frequency Identification (RFID) devices are typically used to store data that "uniquely" identifies the device holder or cardholder. To gain access to a resource or asset such as a building, a financial account, information, or a computer, a user presents a card or other device to a reader or interrogator that reads data from the card or device and subsequently transmits the read data to an upstream device such as a panel or a host system. At the upstream device a decision is typically made to either grant access to the card or device holder or not. There are also readers that combine the functionality of a panel/host and the physical reader into a single unit, which makes the decision. These types of devices are sometimes referred to as stand-alone readers.

Over the years, several different technologies have been utilized for storing and transferring data from a card or a device including RFID, bar codes, magnetic stripe, barium ferrite, optical and other biometrics, contact smart cards, and others. RFID has emerged as the access technology of choice for many reasons including convenience, ability to design a vandal and weather resistant reader, ever-increasing data storage capabilities, and generally higher security. Indeed, electronic access control systems have been incorporating RFID transponders, typically but not solely packaged into the convenient form factor of a card, for more than two decades. As used herein, the term card or credential means all kinds of RFID user devices, including proximity cards, contactless smart cards, key fobs, near field communication (NFC) enabled PDAs or cellular phones, or any other device equipped with an antenna and Integrated Circuit (IC) module RFID transponder including coins, adhesive labels, and not just devices in a card like format.

The current generation of cards contain more memory, communicate faster, provide greater security, and cost approximately the same or even less than the previously available technology. Additionally, international standardization of RFID technology allows increasing interoperability among both cards and readers from different manufacturers. This, coupled with the increased security and storage capacities of today's RFID cards, allows a single card to contain multiple applications further increasing user convenience. Moreover, because of the increased security and storage capacities of today's RFID technology, governments and their institutions are mandating their use to replace older less secure identity management technologies and, for the same reasons, businesses are seeking to replace or update there older security access systems with newer, more capable technology. Due to these factors and more, widespread adoption of newer RFID technologies is occurring at an ever-increasing rate.

Since RFID, bar codes, magnetic stripe, and other technologies are mature, there is a large installed base of cards and their associated readers using these older technologies. As new access control technologies are introduced, upgrading every card can be a difficult, time consuming, and costly process. Similarly, the replacement of readers can be a costly and time-consuming process. Thus, it is highly desirable to implement a technology upgrade solution that minimizes the costs and time required to upgrade a system with as little disruption to the on-going activities of the enterprise as possible. Alternatively, it may be desirable to implement a technology upgrade solution that can provide for a step-wise implementation of upgrade rather than requiring a total upgrade all at once.

Several approaches of migrating to the newer technologies are available, each with a unique set of advantages and shortcomings. Ultimately, the best solution will be one that fits the dynamics and idiosyncrasies of a particular site or enterprise. In fact, combinations of several methods may be employed depending upon the circumstances. Accordingly, a need exists for flexibility in adopting and implementing upgraded technologies.

In general, there are three basic approaches to upgrading a system. The first approach is a wholesale replacement of all of the readers and cards. The second approach is to utilize cards with both a current and a new access technology, *e.g*. dual technology cards. This permits one card to interface with both existing (legacy) technology readers and new technology readers. The third approach is to utilize readers that can read both existing and new technology cards, which eliminates or delays the need to replace existing cards. Replacing all existing cards and readers is typically the most disruptive and expensive approach of the three choices.

The approach of replacing all RFID cards with a card that contains both the existing RFID technology and the new technology also has its downsides. One downside to this particular approach is that the number of existing RFID cards within an overall system is typically much larger than the number of readers. Therefore, relatively speaking, the replacement of the entire population of cards may be a waste of resources if, alternatively, only a few readers existed within the system.

It is believed that that the replacement or upgrade of readers with a new reader that can communicate with both older RFID cards and newer RFID cards is a viable approach that often is less costly and less disruptive than re-badging all users of a secure access system.

In the commercial or business environment, companies or other institutions are frequently acquired, sold, merged or otherwise transitioned out of, into, or with another company or companies. When this occurs, it is difficult, time consuming and costly to combine or otherwise make compatible the reader/credential technologies of the once separate entities. For example, one company may have utilized one manufacturer's access control system and the other company may have utilized another manufacturer's access control system, and the two systems may not be compatible with one another or the business may decide to change to the access system of a new manufacturer all together. As such, it is highly desirable to provide a multi-technology reader system capable of reading different credentials and/or otherwise functioning to transition/update the system so that the impact of replacing some or all of the existing credentials is reduced and that the overall system disruptions are minimized.

In still other environments, it is important to provide a system capable of providing two-factor authentication. That is, in addition to the presented credential (a first factor), a second factor is needed for access to be granted. The second factor can be, among others, a password or personal identification number (PIN), a second credential, or a biometric input, such as a fingerprint, a retinal scan, or voice recognition. For example, before access is granted in a two-factor authentication system, a person would present something physical or tangible, such as an access badge or identification card, and something they know, such as a PIN number or password which is less likely to be lost or stolen. Thus, it would be advantageous to provide a flexible system capable of two-factor or multi-factor authentication.

Document US 5 756 978 discloses a modular card reader which can be upgraded to various reading technologies by mounting additional card reader or biometric sensor boards.

WO 93/13498 discloses a magnetic card reader terminal with a keypad. The card reader is snap-mounted on a predetermined side of the housing.

### SUMMARY OF THE INVENTION

The reader mounting bracket design of at least one embodiment of the present invention provides a flexible device for upgrading and/or transitioning access control technologies. In one embodiment, the reader mounting bracket is configured to provide flexible orientation of multiple technology units that are selectively mountable to the bracket. This flexible orientation has many advantages, including the ability to implement a new technology protocol in a step-wise function, minimizing the costs and time required to upgrade a system, and minimizing disruptions to the on-going activities of the enterprise.

Embodiments of the present invention provide advantages over the prior art in that the reader mounting bracket design facilitates faster and more efficient removal, orientation and reorientation, and/or exchange of technology units associated therewith. Initially, a technology unit may be installed in a variety of orientations to provide optional relative configurations between technology units and the surrounding environment. In addition, after installation the bracket may be reoriented, and one or more technology units may be easily reinstalled using the same interconnections as before. Because the bracket is configurable for multiple relative orientations, the installation of the technology units can be easily customized for the customer, application, and location. Because the technology units may be positioned in a plurality of orientations, developing, manufacturing and inventorying individual models for each orientation or configuration can be eliminated. This results in a more efficient transition process, which decreases disruptions and increases profits.

In one embodiment of the present invention, a multi technology reader having two technology units is provided. The reader mounting bracket is configured to receive the technology units in multiple relative orientations. The technology units may interconnect to the reader mounting bracket by known interconnecting means. In one embodiment, a first technology units is formed integrally with the reader mounting bracket and a second technology unit is removable, replaceable, and otherwise substitutable depending on the desired technology (*i.e*., keypad, RF or proximity technology). Because one of the technology units is interchangeable, legacy technology can be upgraded or otherwise transitioned in a cost and time efficient fashion. Moreover, the second technology unit is capable of being mounted to the bracket in multiple relative orientations with respect to the first technology unit. The multi-orientable bracket has many advantages, including providing versatile reader configurations that can be implemented in diverse locations and used for numerous applications. In another embodiment, neither technology unit is formed integrally with the mounting bracket, each may be removed, repositioned, reoriented or replaced with a different technology unit.

In one embodiment of the present invention, a multi technology reader having more than two technology units is provided. Again, the reader mounting bracket is configured to receive the technology units in relative orientation. By providing additional technology units, the flexibility and versatility of the system are increased. In an exemplary embodiment, a first technology unit may be formed integrally with the reader mounting bracket and second and third technology units may be removable and reoriented in multiple relative configurations. By including more technology units, the system's overall flexibility and capability are increased. For example, a facility's access control technology may be integrated with additional technologies, such as a video device, speaker, or other electronic devices.

Further, multi technology readers of the present invention are capable of providing two-factor or multi-factor authentication. As a result, increased security protocols can be implemented with minimal cost.

In one embodiment, symmetrically oriented features on the reader mounting bracket enable technology units to be mounted thereto in multiple relative configurations. In one embodiment, the features are symmetrically oriented about two axes of a technology unit such that in any of the possible mounting orientations the features maintain their functionality.

In some embodiments of the present invention, the reader mounting bracket includes a feature activator that is symmetrically positioned to provide multi-orientation capabilities. The feature activator of one embodiment includes two tamper posts configured such that when a technology unit is connected to the mounting bracket, one of the tamper posts interconnect with a tamper switch of the technology unit. The feature activator is further configured such that unauthorized tampering will result in a disconnect of the tamper post with the tamper switch, which consequently may cause the technology unit to shut down or trigger an alarm or other signal. The symmetrical positioning of the feature activator(s) is such that, depending on the orientation of the technology unit, one of the tamper posts is engaged with a tamper switch of the technology unit. In another embodiment of the invention, a detachable feature activator is provided. The detachable feature activator may be directionally oriented such that installation is permitted in one direction. The detachable feature activator may comprise a tamper post interconnected to a screw post via an interconnection arm. Having a symmetrical and detachable feature activator is advantageous because, depending on the orientation of the technology unit, the tamper post is engaged with the technology unit and the screw post is positioned to fasten the technology unit to the reader mounting bracket.

The above-described embodiments and configurations are not intended to be complete nor exhaustive. As will be appreciated, other embodiments of the invention are possible utilizing, alone or in combination, one or more features set forth above or described below.

### BRIEF DESCRIPTION OF THE DRAWINGS

Several drawings have been developed to assist with understanding the invention. Following is a brief description of the drawings that illustrate the invention and its various embodiments.
Fig. 1 is a perspective view of a reader of one embodiment of the present invention.
Fig. 2 is a perspective view of a reader mounting bracket for the reader of Fig. 1.
Fig. 3A is a front plan view of the reader of Fig. 1, with a magnetic stripe reader on the right side of the apparatus.
Fig. 3B is a front plan view of the reader of Fig. 1, with a magnetic stripe reader on the left side of the apparatus.
Fig. 4A is a front plan view of the reader mounting bracket of Fig. 3A.
Fig. 4B is a front plan view of the reader mounting bracket of Fig. 3B, which is the mounting bracket of Fig. 3A rotated 180 degrees.
Fig. 5A is an exploded perspective view of a mounting bracket of one embodiment of the present invention with a magnetic stripe reader positioned on the left side of the apparatus, and showing a second technology unit removed and the symmetric orientation of a feature activator relative to the second technology unit.
Fig. 5B is an exploded perspective view of the mounting bracket of Fig. 5A reoriented 180 degrees with the magnetic stripe reader oriented on the right side of the apparatus, and showing the symmetric orientation of a second feature activator relative to the same second technology unit illustrated in Fig. 5A.
Fig. 6A is a bottom elevation view of the reader mounting bracket of Fig. 2.
Fig. 6B is a bottom elevation view of the reader of Fig. 1.
Fig. 7A is a top elevation view of the reader mounting bracket of Fig. 2.
Fig. 7B is a top elevation view of the reader of Fig. 1.
Fig. 8A is a left side elevation view of the reader mounting bracket of Fig. 2.
Fig. 8B is a left side elevation view of the reader of Fig. 1.
Fig. 9A is a right side elevation view of the reader mounting bracket of Fig. 2.
Fig. 9B is a right side elevation view of the reader of Fig. 1.
Fig. 10A is a rear perspective view of the reader mounting bracket of Fig. 2.
Fig. 10B is another perspective view of the reader mounting bracket of Fig. 2.
Fig. 11 is a perspective view of a reader of another embodiment of the present invention.
Fig. 12 is an exploded perspective view of the reader mounting bracket of Fig. 11, shown with the magnetic stripe reader oriented on the left side, and also showing the orientation of a detachable feature activator of one embodiment of the present invention.
Fig. 13 is an exploded perspective view of the reader mounting bracket of Fig. 12, reoriented 180 degrees, shown with the magnetic stripe reader oriented on the right side, and also showing the orientation of the detachable feature activator.
Fig. 14 is a rear plan view of the reader mounting bracket of Fig. 11.
Fig. 15 is perspective view of a reader of another embodiment of the present invention.

It should be understood that the drawings are not necessarily to scale, and that in certain instances, the disclosure may not include details which are not necessary for an understanding of the present invention, such as conventional details of fabrication and assembly, by those of skill in the art. Also, while the present disclosure describes the invention in connection with those embodiments presented, it should be understood that the invention is not strictly limited to these embodiments.

### DETAILED DESCRIPTION

Embodiments of the present invention are directed towards devices, systems, and methods, which are used in association with updating a credential population, integrating existing credential populations, and/or increasing security with heightened authentication requirements. Although well suited for use in devices, systems, and methods employing RF communication protocols, magnetic communication protocols, and keypad communication protocols, one of skill in the art will appreciate that the mounting brackets described herein can be used with multiple different readers or input devices in both access control and non-access control systems.

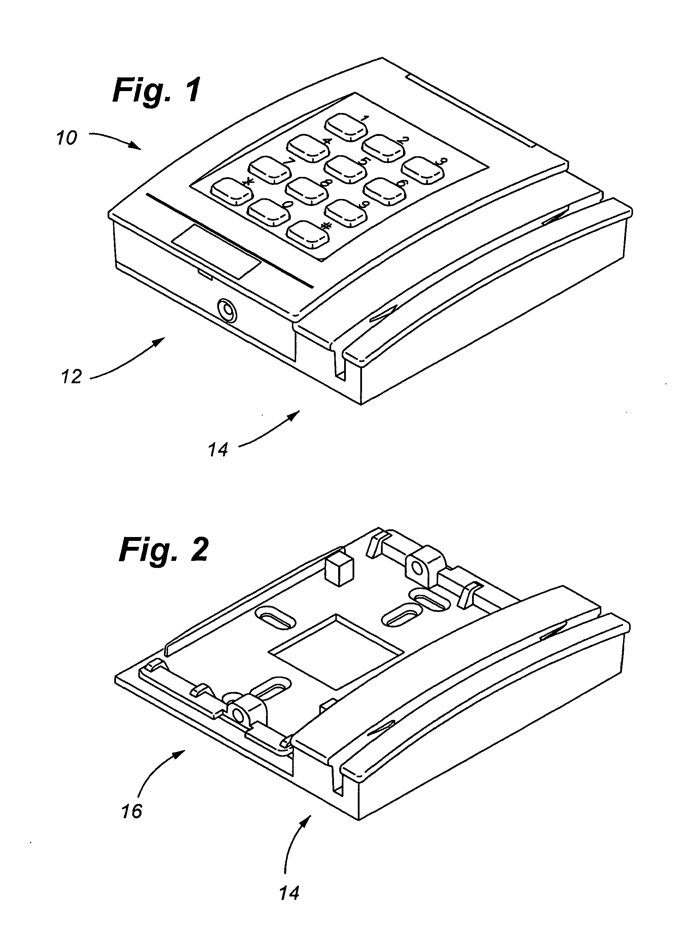

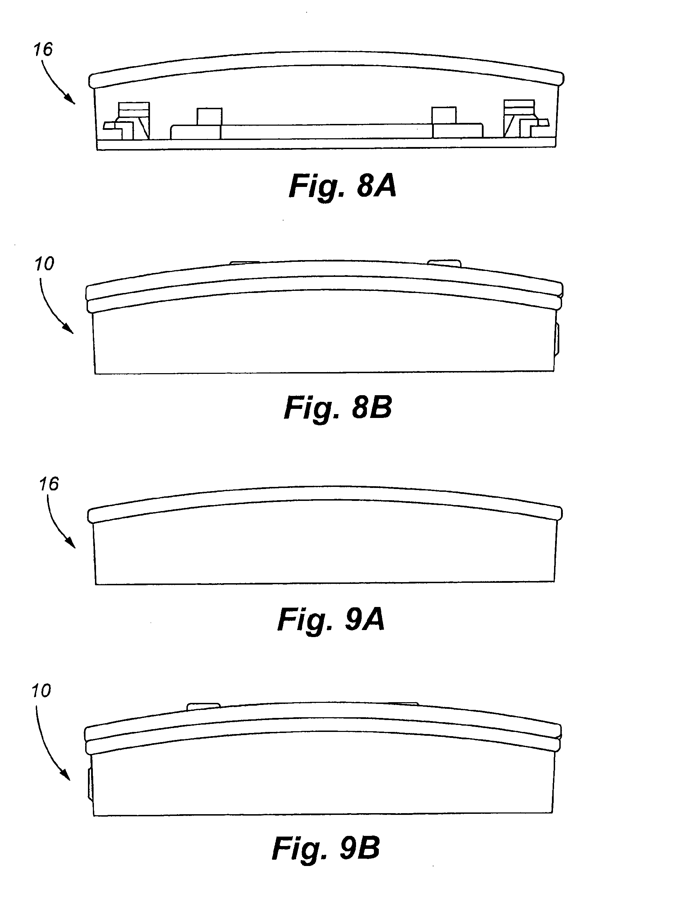

Referring initially to Figs. 1-10, a multiple technology interrogator or reader 10 of one embodiment of the present invention is illustrated. One purpose of the reader 10 is to verify the identity of at least one credential. The reader may be configured to analyze user-provided or machine-readable credentials. The reader 10 may optionally be used to verify the identity of at least two credentials, which may or may not be of different technology types. In some embodiments, the reader 10 functions to control access to certain assets. More specifically, the reader 10 may be positioned at an access point for a given asset (*e.g*., a door for a room, a building or safe, a computer for electronic files, *etc.*). Unless a proper credential is presented to the reader 10, the access point is maintained in a secure state such that admittance or access to the asset is denied. If a credential having authority to access the asset is presented to and verified by the reader 10, then the reader 10, or components connected thereto (*e.g*., a control panel), has the discretion to allow the user of the credential to the asset and implement various actions accordingly.

In the embodiment of Fig. 1, more than one technology unit is provided such that more than one credential type or data input may be analyzed by the reader. For example, if a company is phasing out magnetic stripe ("magstripe") access cards in favor of a contactless credential technology, then some company employees may have legacy magstripe access cards for use with a magstripe reader while other users may have the newer contactless credential technology. This is advantageous because companies or other entities may implement new technology protocols in a piecemeal or step-wise function in order to save costs associated with technology upgrades.

Alternatively, or in addition, the reader 10 may be configured to provide a cost efficient way of implementing two-factor authentication protocols. For example, users may be required to establish that they both possess a valid credential (*e.g*., magstripe, RFID, key fob, *etc.*) and possess knowledge of a password or other secret. The reader 10 would be configured to analyze both factors in connection with making an access control decision. In some embodiments, this requires the reader 10 to include a first technology unit 12 for analyzing a tangible thing possessed by the user (*e.g*., a reader for reading a machine-readable credential) and a second technology unit 14 for analyzing the second factor, *e.g*., a keypad which allows a user to enter a non-tangible factor such as password or other secret. In other two-factor authentication systems, the reader may analyze two different things possessed by a particular user in connection with making an access control decision. For instance, the reader may include two different types of technologies for reading two different types of machine-readable credentials. As another example, the reader may include two different types of technologies, one of which reads machine-readable credentials and the other of which reads biometric data (*e.g*., fingerprint scanner, retina scanner, facial scanner, voice analyzer, *etc.*) from the user. It should be appreciated that the technology units may be of the same or different technologies and two or more technology units may be utilized.

As can be seen in Fig. 1, the reader 10 comprises first and second technology units 12 and 14 that are configured to analyze access credentials of two different types. The first and second technology units 12 and 14 may be configured to analyze numerous types of access credentials, such as an access card credential, a RFID credential, a Wiegand credential, a contact or contactless smartcard credential, a keypad-input credential, a barcode credential, a magstripe or other card swipe credential, a proximity credential, or a biometric credential. In the embodiment shown, the first technology unit 12 is a keypad and the second technology unit 14 is a magstripe reader. Any number of technologies may be used in the first and second technology units 12 and 14.

As will be explained in greater detail below, the first and second technology units 12 and 14 are interconnected to a reader mounting bracket 16. As used herein, the terms "first technology unit" and "second technology unit" are used in reference to devices or modules used to receive data input. The term "technology unit(s)" may include a stand alone reader or may facilitate data communication to a reader. The term technology unit is not exclusive to reader devices and is also intended to cover other devices, such as Voice over Internet Protocol (VoIP) devices, video devices, cameras, screens, speakers, microphones, or any other auxiliary electronic devices that would be desirable to integrate with or into a reader.

Referring to Fig. 2, the reader mounting bracket 16 of one embodiment of the present invention is illustrated. This reader mounting bracket 16 is configured to receive the first and second technology units 12 and 14. The reader mounting bracket 16 may interconnect to the first and second technology units 12 and 14 using any number of interconnecting means, including, without limitation, snap fits, interference fits, and fasteners (*i.e*., screws, pins, clips, and clasps). In addition, one of the technology units 12 or 14 may be formed integrally with the reader mounting bracket 16. The exemplary second technology unit 14, a magnetic stripe reader in this case, is depicted as being integral to the bracket 16. Alternatively, as can be appreciated by one of skill in the art, the second technology unit 14 may snap-fit (or otherwise be detachable/attachable) with the reader 10. One, both, either or neither of the technology units may be interconnected to the bracket 16 by additional securing means. For example, the first technology unit 12 may be secured to the mounting bracket 16 by a snap fit and a mechanical fastener, such as one or more screws.

In accordance with at least some embodiments of the present invention, the reader mounting bracket 16 is configured to receive the first technology unit 12 in a plurality of orientations, thereby providing optional relative configurations between the first and second technology units 12 and 14. The reader mounting bracket 16 may receive the first technology unit 12 in a right, left, top, or bottom orientation. That is, the reader mounting bracket 16 may receive the first technology unit 12 to the left of, the right of, above, or below the second technology unit 14. One advantage to providing a bracket configurable for multiple relative orientations between technology units is that the installation of the reader and the relative orientations of the technology units can be customized on a per-customer or per-installation basis. In particular, it is often desirable to position an access control reader near a door, entryway, gate or some other physical barrier, and depending on the location, it may be further desirable to selectively orient the bracket such that one of the technology units is on one particular side or orientation. For example, if the reader is to be mounted to a mullion or door frame, it is advantageous to be able to mount the reader in a configuration that is easily accessible by the user. In addition, it is advantageous to have a single bracket capable of multiple orientations in order to provide versatile reader configurations that can be used in a wide variety of locations and for a broad range of applications. This is an improvement over conventional reader mounts or brackets because individual models for each orientation or configuration (*i.e*., left and right models) do not need to be designed, manufactured, or stocked. A multi-orientation reader bracket eliminates the need for developing different models with various orientations and stockpiling inventory of the different models. This results in substantial savings.

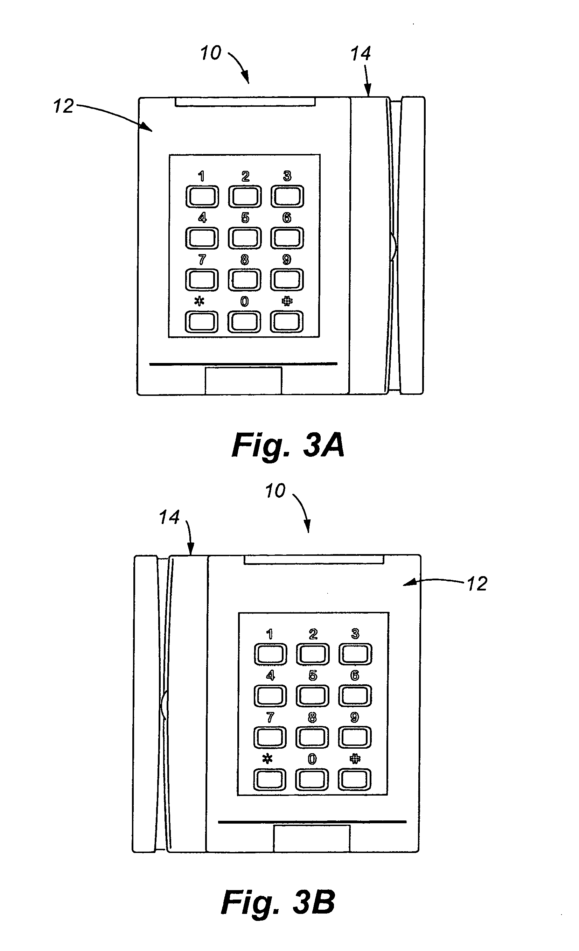

Referring to Figs. 3A and 3B, one embodiment of a multi technology reader 10 is shown in two different orientations. In particular, in Fig. 3A the second technology unit 14 is shown on the right side of the first technology unit 12. In contrast, in Fig. 3B, the second technology unit 14 is shown on the left side of the first technology unit 12. Although not shown, the second technology unit 14 may also be oriented adjacent to the top or bottom side of the first technology unit 12. The multiple orientations are achieved by a versatilely designed mounting bracket 16.

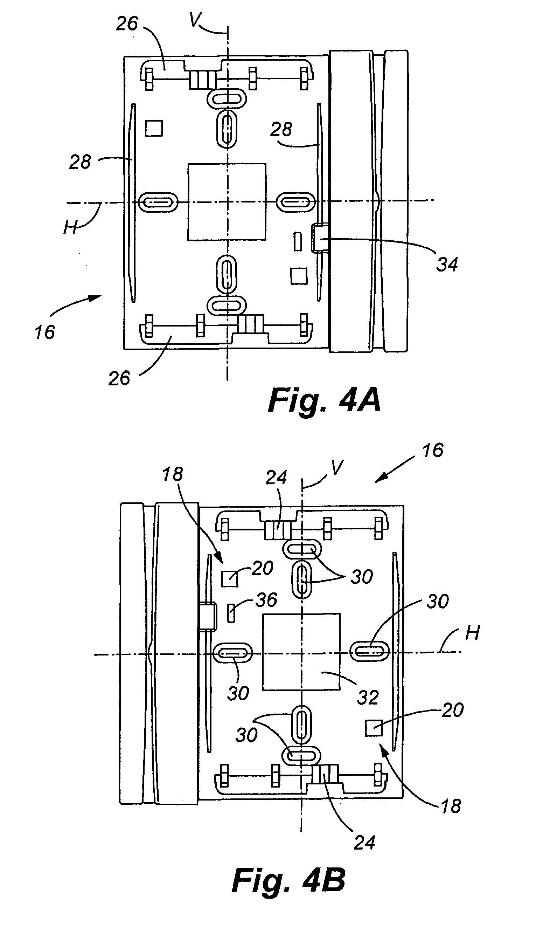

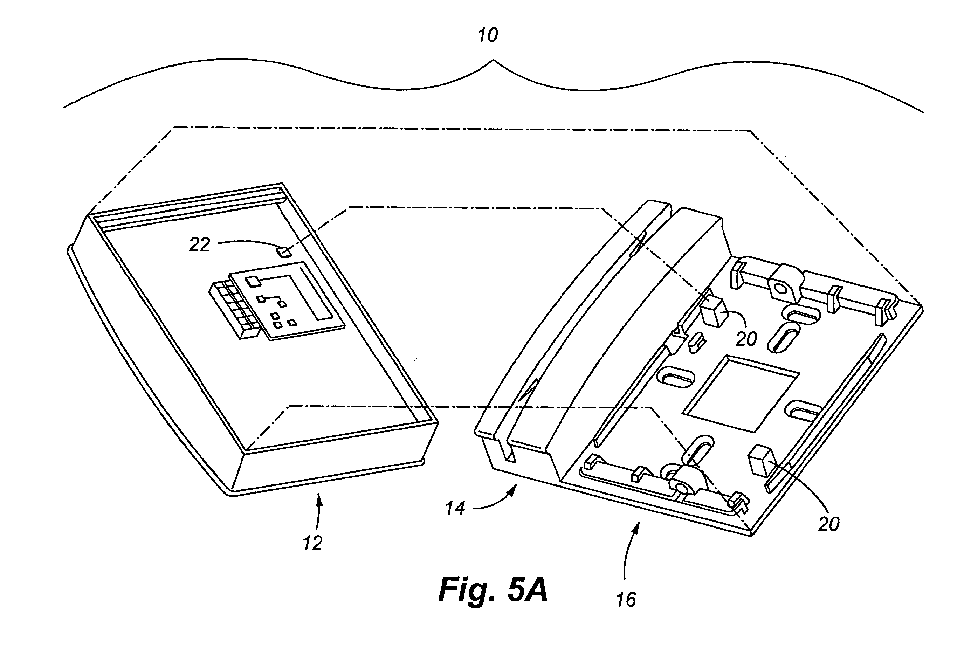

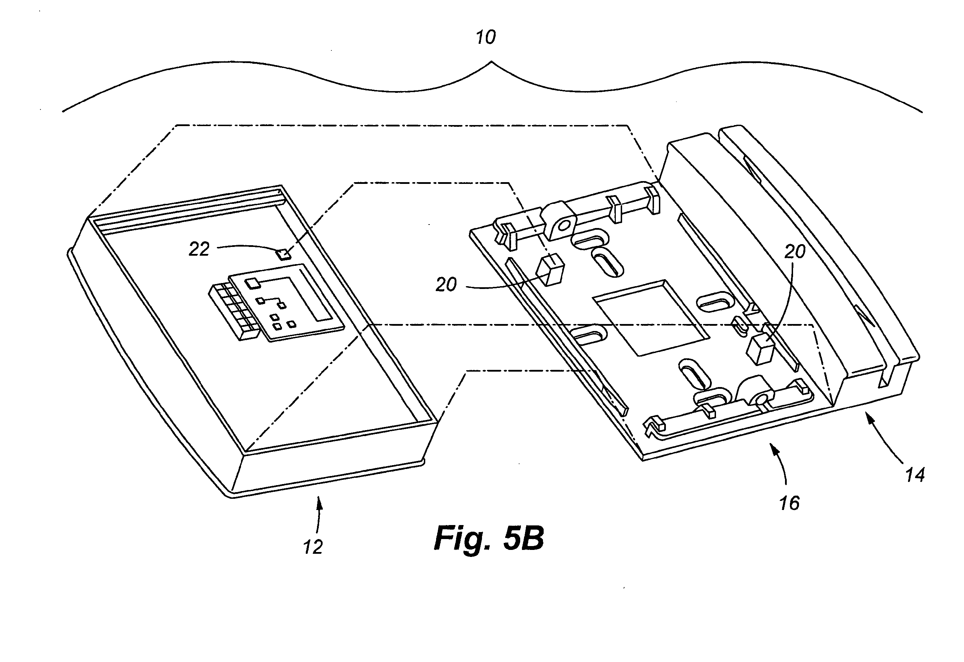

In Figs. 4A and 4B, the reader 10 of Figs. 3A and 3B are shown with the first technology unit 12 removed to reveal the reader mounting bracket 16. One purpose of the reader mounting bracket 16 is to provide multi-orientation capabilities. In some embodiments, the reader mounting bracket 16 may include a feature activator 18 or a number of feature activators. A feature activator is a mechanical, electrical, optical or other type of connection between the bracket and a removable technology unit that permits activation of the technology unit and/or deactivates the technology unit if the connection is interrupted. Alternatively, the feature activator may be a sensor that signals interconnection and disconnection. The feature activator 18 of one embodiment of the present invention comprises one or more tamper posts 20 that operates a switch/switches. The tamper posts 20 are configured such that when the first technology unit 12 is connected to the reader mounting bracket (in any orientation), the tamper post 20 is engaged with a complementary tamper element of the first technology unit 12. In the embodiments shown in Figs. 5A and 5B, the tamper post 20 interfaces with a tamper switch 22 (*e.g*., mechanical, electrical, and/or optical switch) provided on back face of the first technology unit 12. Moreover, the tamper post 20 may be configured such that unauthorized tampering (*i.e*., removing or trying to remove the first technology unit 12 from the reader mounting bracket 16 or other unauthorized use of the reader) will result in a disconnect of the tamper post 20 with the tamper switch 22. In turn, this may cause the technology unit to shut down and/or trigger an alarm or a signal warning of the unauthorized tampering. To provide a bracket 16 capable of receiving a technology unit in multiple orientations, the feature activators 18 are preferably symmetrically aligned across two-axes of the first technology unit 12 such that, depending on the orientation of the first technology unit 12, one of the two tamper posts 20 is engaged with a single tamper switch 22 of the first technology unit 12. Of course, the technology unit may also be configured with multiple tamper switches to mate with different tamper posts depending upon the orientation of the mounting bracket. However, this requires a more complex and expensive technology unit with multiple tamper switches. A single tamper switch capable of interconnecting with multiple tamper posts is preferred.

In embodiments where the second technology unit is not integral to the reader mounting bracket, a second feature activator may be provided to ensure that a proper connection is maintained between the second technology unit and the reader mounting bracket.

In one embodiment of the present invention, the reader mounting bracket 16 further includes screw posts 24. The purpose of the screw posts 24 is to securely fasten the first technology unit 12 to the reader mounting bracket 16. Any number of mechanical fastening mechanisms may be used to fasten the first technology unit 12 to the reader mounting bracket 16. Like the feature activators, it is preferable that the screw posts 24 are oriented on the reader mounting bracket 16 in a symmetrical fashion. For example, as shown in Figs. 4A and 4B, horizontal H and vertical V axes are included for illustrative purposes. In this embodiment, the features of the reader mounting bracket are symmetrically positioned relative to these axes.

In some embodiments, the screw posts 24 also include a threaded bore (not shown). The first technology unit 12 is secured to the reader mounting bracket 16 using one of the screw posts 24 (the orientation of the first technology unit 12 dictates which screw post 24 is used). However, in some environments it may be advantageous to provide additional screw posts to secure the first technology unit 12 to the reader 10. Additional screw posts or similar securing mechanisms may be provided for the second technology unit in the event that the second technology unit is not integral to the reader mounting bracket.

The reader mounting bracket 16 of one embodiment of the present invention may include hooks 26. In the exemplary embodiment shown, the reader mounting bracket 16 includes hooks 26 oriented along the top and bottom sides of the bracket 16. The shape of the hooks 26 allows for the first technology unit 12 to be aligned with and secured to the reader mounting bracket 16. The hooks 26 may include any number of additional support members to enhance the structural stability and support of the hooks 26 and may be oriented along any of the sides of the reader mounting bracket 16.

The reader mounting bracket 16 may further include slide rails 28. One purpose of the slide rails 28 is to align the first technology unit 12 before it is secured into place onto the hooks 26. Another purpose of the slide rails 28 is to provide additional structural support for the first technology unit 12. In other embodiments, more or fewer slide rails 28 may be present. The slide rails 28 may be integrated with the reader mounting bracket 16 or they may be connectable with the reader mounting bracket 16.

A plurality of mounting slots 30 may also be provided on the reader mounting bracket 16 to facilitate mounting of the reader 10 to a wall, mullion, door, door frame, gate, or any other structure or surface. For increased versatility, the slots are oriented perpendicular to one another although other orientations will also work. As illustrated in Figs. 4A and 4B, the mounting slots 30 are oriented horizontally and vertically. The mounting slots 30 may also be sized to mount with United States, European, and Asian back boxes and gang switch boxes. The mounting slots 30 can also be sized to accommodate a variety of screw sizes.

The reader mounting bracket 16 further includes a centrally positioned recess 32. The recess 32 provides space for the electrical circuitry or other hardware of the first technology unit 12 to reside.

The reader mounting bracket 16 also includes a pathway between the first technology unit 12 and the second technology unit 14. In the embodiment shown, the pathway comprises a cut-out 34 for receiving any wired connections and a wire retainer 36 for securing and directing any wired connections between the first technology unit 12 and the second technology unit 14. The wires are wrapped around and/or secured against the wire retainer 36 such that the wires do not interfere with the other components of the reader 10. In other embodiments of the present invention, a wireless communication link is provided. In still other embodiments, a completely contactless communication link is provided. For example, in some embodiments, the Radio Frequency (RF) signals are used to establish the communication link, in which case both the first and second technology units 12 and 14 comprise RF communication interfaces (e.g., an RF antenna) thereby facilitating the transmission and receptions of RF signals. The first and second technology units 12 and 14 may also comprise modulation/demodulation units for formatting electrical signals and messages consistent with an agreed upon format.

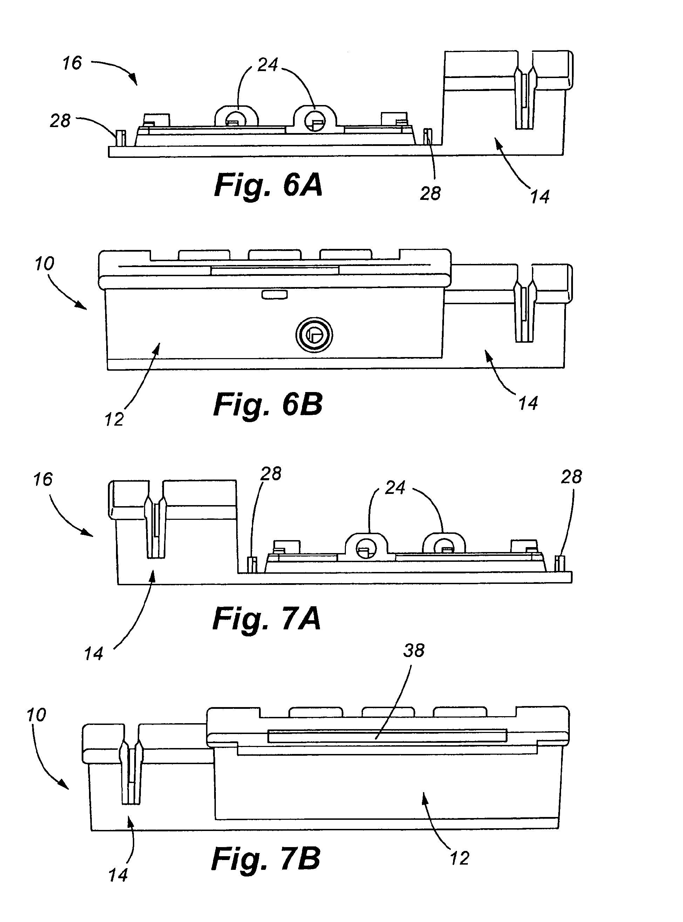

Referring now to Figs. 6-10, additional views of the reader mounting bracket 16 and first and second technology units 12 and 14 are shown. Although, the second technology unit 14 is illustrated on the right side, as described above, the reader mounting bracket 16 allows other orientations of the technology units.

Referring specifically now to Fig. 7B, in at least one embodiment of the present invention, the reader includes mechanisms for providing feedback to a user. In the embodiment shown, a light source 38 is provided along one side of the first technology unit 12. In some embodiments, the light source 38 is a Light Emitting Diode (LED) capable of flashing red to signal access denied and flashing green to signal access granted. Any number of light sources 38 may be used to provide feedback to a user of the reader 10. In still other embodiments, feedback may be provided to a user by other mechanisms, including a speaker, an audio amplifier, or other types of audio, tactile, or visual interfaces.

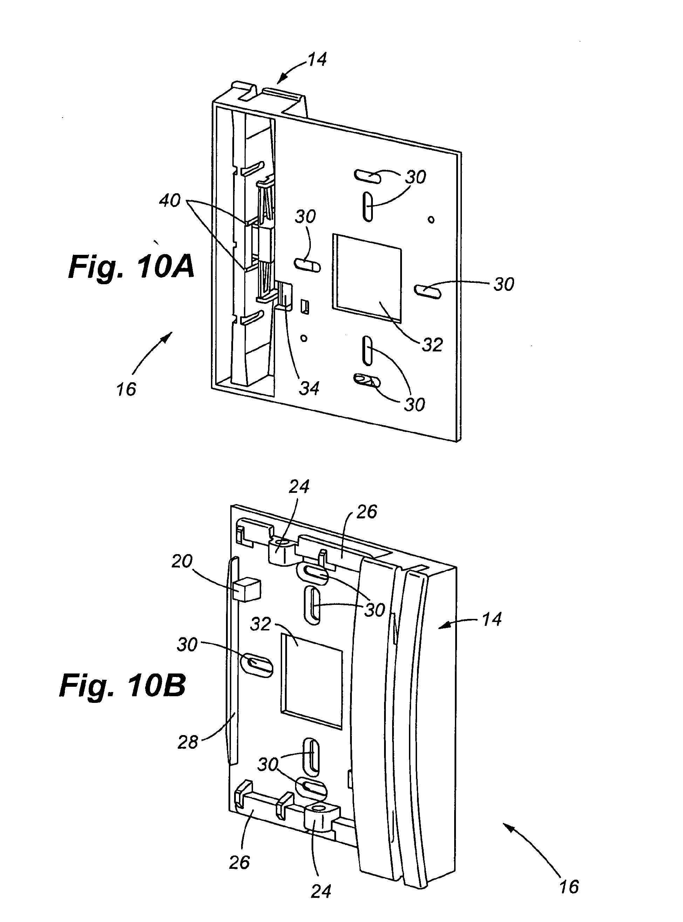

Referring now to Fig. 10A, the rear side of the reader mounting bracket 16 is shown. In one embodiment of the present invention, when the second technology unit 14 comprises a magnetic stripe reader, read head connectors 40 are provided to receive and/or interpret the information conveyed from the magnetic stripe reader.

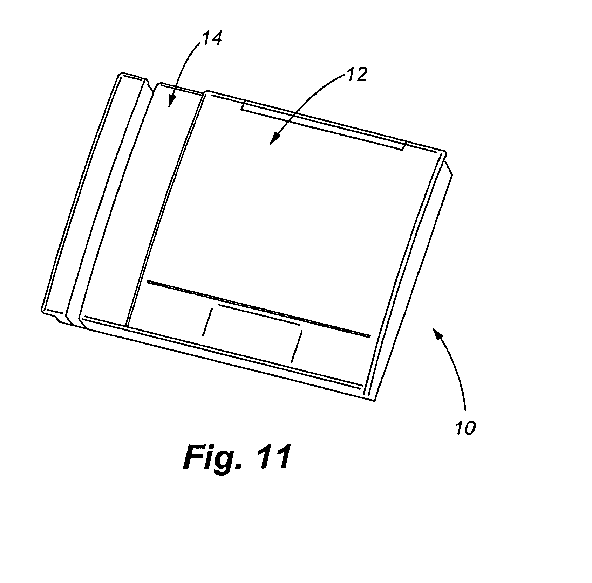

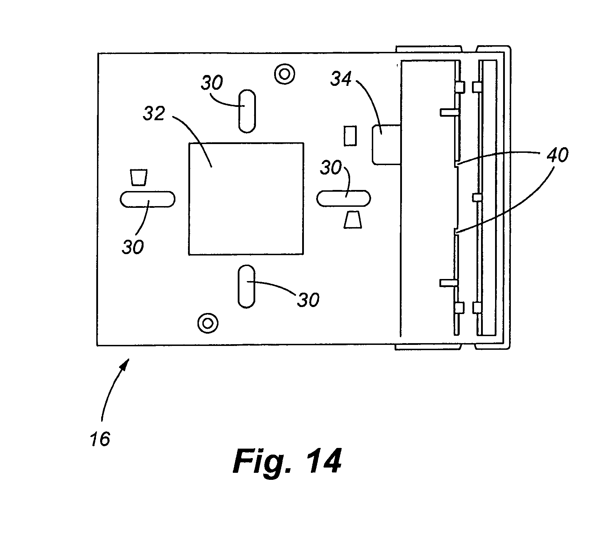

A reader 10 of another embodiment of the present invention is illustrated in Figs. 11-14. The reader 10 comprises first and second technology units 12 and 14 that are configured to analyze access credentials. In the embodiment shown, the first technology unit 12 is a RF reader and the second technology unit 14 is a magnetic stripe reader. However, any number of reader technologies and/or auxiliary electronic devices may be used in the first and second technology units 12 and 14. The first and second technology units 12 and 14 are interconnected to a reader mounting bracket 16 of another embodiment of the present invention. Fig. 11 depicts an example of a reader 10 used for implementing a technology upgrade (*i.e.,* from a magnetic stripe credential to a RF credential). Like the embodiment discussed above, the technology reader mounting bracket 16 of this embodiment provides multiple orientations.

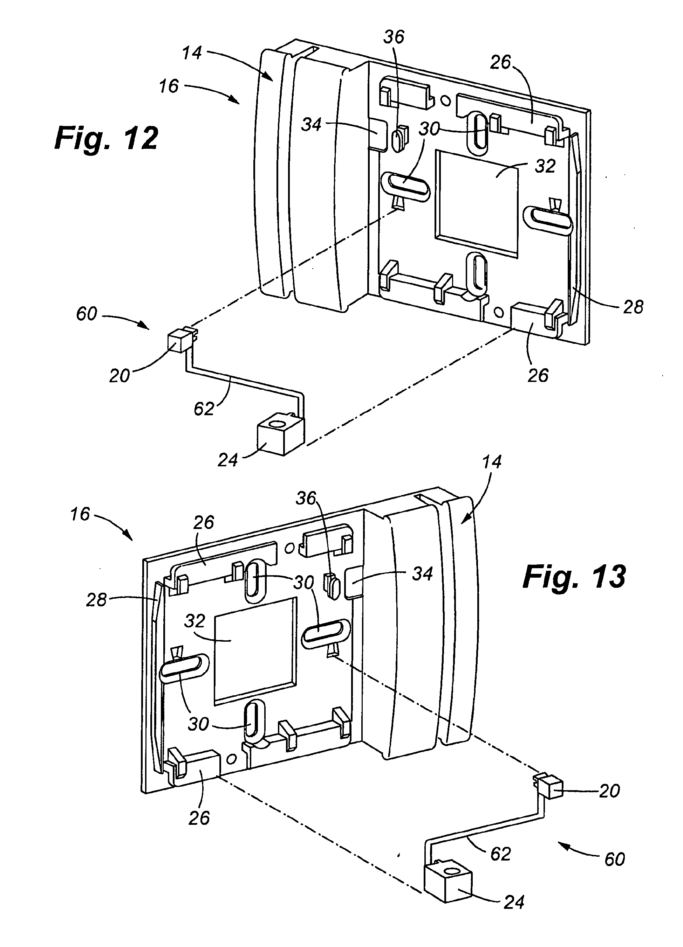

Referring now to Figs. 12 and 13, a reader mounting bracket 16 of another embodiment of the present invention is shown. Like the embodiment described above, the reader mounting bracket 16 is designed to receive first and second technology units 12 and 14. Although the reader mounting bracket may be designed to receive more technology units. As shown, the second technology unit 14 is formed integrally with the reader mounting bracket 16. However, the second technology unit 14 may be interconnected to the reader mounting bracket 16 by any number of fastening mechanisms, including a snap fit, friction fitting, or the like.

The reader mounting bracket 16 is configured to receive the first technology unit 12 in a plurality of configurations (*i.e*., left and right). As discussed above, the reader mounting bracket 16 is versatile and may be installed in multiple orientations and eliminates the need for specific models for each orientation. One of skill in the art will appreciate that the bracket 16 may also be configured to orient the first and second technology units 12 and 14 in a top or bottom configuration as well.

The reader mounting bracket 16 also includes a detachable feature activator 60 of one embodiment of the present invention. The detachable feature activator 60 comprises a tamper post 20 interconnected to a screw post 24 via an interconnection arm 62. The detachable feature activator 60 is adapted to interconnect to the reader mounting bracket 16 in multiple orientations, depending on the chosen orientation of the first technology unit 12. In the embodiment shown, the detachable feature activator 60 snap-fits into the reader mounting bracket 16. The detachable feature activator 60 is directionally oriented such that installation is permitted in only one direction. The tamper post 20 and screw post 24 of the detachable feature activator 60 are tapered to provide this unidirectional orientation. That is, because of their tapered shape, the detachable feature activator 60 cannot be installed in the wrong direction. This unidirectional connection feature may be implemented in other ways known to those of skill in the art which are incorporated into and are part of the present embodiment. In addition, the detachable feature activator 60 is mirrored (or symmetric) about two axes of the first technology unit 12 such that depending on the orientation of the first technology unit 12 the tamper post 20 is interconnected with the first technology unit 12 and the screw post 24 is positioned to fasten the first technology unit 12 to the reader mounting bracket 16. The screw post 24 may optionally include a threaded bore. The detachable feature activator 60 may include additional features, including, but not limited to, optical, mechanical, or electro-mechanical features. The multi-orientation capability is preferably maintained by symmetrically orienting the detachable feature activator 60 about two-axes of the first technology unit 12.

Similar to the reader mounting bracket described above, the reader mounting bracket 16 of the embodiment shown in Figs. 12-14 includes hooks 26 to align and secure the first technology unit 12 to the reader mounting bracket 16. The hooks may be oriented along the top, bottom, left, or right sides, and/or along adjacent or opposite sides. Although not limited to the orientation shown, Figs. 12-14 show the hooks oriented along the top and bottom sides of the bracket. The hooks 26 may also include any number of additional support members to enhance the structural stability and support of the hooks 26. The reader mounting bracket 16 further includes slide rails 28 to provide structural support for the first technology unit 12. A plurality of mounting slots 30 are also provided on the reader mounting bracket 16 in order to facilitate mounting the reader 10 to a wall, mullion, door, door frame, gate, or other structure or surface. The reader mounting bracket 16 includes a centrally positioned recess 32 that provides space for the electrical circuitry or other hardware of the first technology unit 12 to reside. The reader mounting bracket 16 also includes a pathway between the first technology unit 12 and the second technology unit 14. In the embodiment shown, the pathway comprises a cut-out 34 for receiving any wired connections and a wire retainer 36 for securing and directing any wired connections between the first technology unit 12 and the second technology unit 14.

The reader mounting bracket 16 may optionally include additional components to facilitate the attachment, securement, functioning, or positioning of the first and second technology units 12 and 14. For example, the reader mounting bracket 16 may include a resistive heating element on the back side of the second technology unit 14. In the event that the second technology unit 14 comprises a magnetic stripe reader then the addition of a resistive heating element would increase the operating temperature limits of the device.

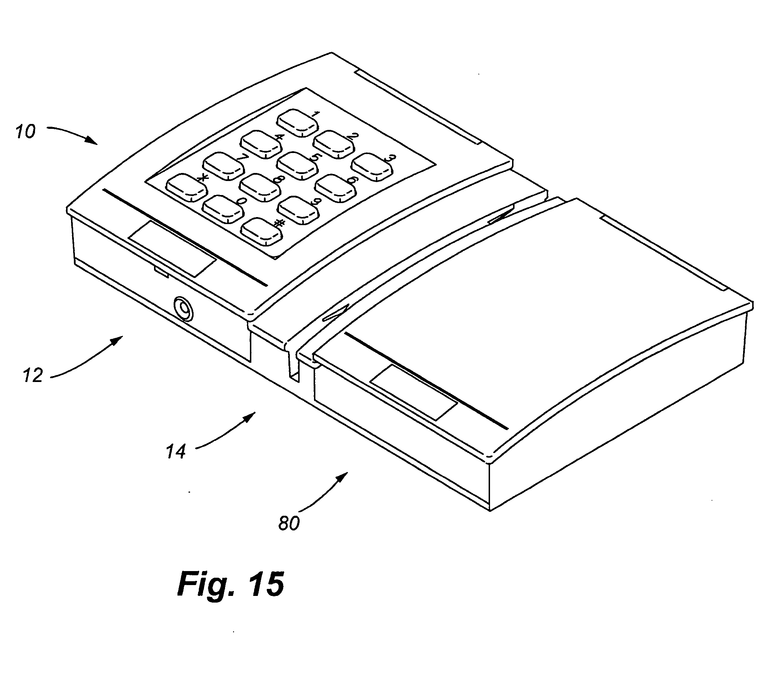

Referring now to Fig. 15, a reader 10 of yet another embodiment of the present invention is illustrated. The reader 10 comprises a first technology unit 12, a second technology unit 14, and a third technology unit 80. However, the reader 10 may include any number of additional technology units. Moreover, the reader 10 as embodied in Fig. 15 may include any of the features discussed above and still be within the scope of the invention. As discussed above, the third technology unit 80 may include any number of technology types, and the technology types may or may not be different from one another. In the embodiment shown, the first technology unit 12 is a keypad, the second technology unit 14 is a magnetic stripe reader, and the third technology unit 80 is a contactless RF reader. The magstripe reader is illustrated in a middle position, between the other two technology units. Alternatively, it may be positioned in an end location or a top or bottom location. Any, none, or some of the technology units may be integrally formed or removable from a reader mounting bracket (not shown). Like the reader mounting brackets discussed above, the mounting bracket of the embodiment shown in Fig. 15 is configured to receive the technology units in a plurality of relative orientations.

The reader devices discussed herein may be made of a polycarbonate material. However, any number of durable and resilient materials may be used, such as other thermoplastic polymers or metals. For readers used in outdoor environments, it may be desirable to treat the materials with a waterproofing or weatherproofing material treatment.

The features identified and discussed above are scalable in size such as to accommodate a wide range of reader/electronic devices.

The foregoing discussion of the invention has been presented for purposes of illustration and description. The foregoing is not intended to limit the invention to the form or forms disclosed herein. In the foregoing description for example, various features of the invention have been identified. It should be appreciated that these features may be combined together into a single embodiment or in various other combinations as appropriate for the intended end use of the band. The dimensions of the component pieces may also vary, yet still be within the scope of the invention. This method of disclosure is not to be interpreted as reflecting an intention that the claimed invention requires more features than are expressly recited in each claim. Moreover, though the description of the invention has included description of one or more embodiments and certain variations and modifications, other variations and modifications are within the scope of the invention which is defined by the appended claims.

## Claims

1. A reader (10), comprising:
a first technology unit (14) configured to analyze a first type of access credential, the first
technology unit configured to automatically read data from a card;
a second technology unit (12) configured to analyze a second type of access credential; **characterised by**:
a mounting bracket (16) configured to receive the first and second technology units in a plurality of orientations such that when the second technology unit is mounted in a first orientation, the first technology unit is adjacent to a first side of the second technology unit,
and when the second technology unit is mounted in a second orientation, the first technology unit is adjacent to a second side of the second technology unit.

2. The reader of claim 1, wherein the second technology unit is configured to receive at least one of a machine-readable credential and a user-provided credential.

3. The reader of one of the preceding claims, wherein technology used by the first technology unit is different from technology used by the second technology unit, wherein the first technology unit is configured to analyze at least one of a magnetic stripe credential, a wiegand swipe credential, a RF credential, a contact credential, a contactless credential, a proximity credential, a smart card credential, and a barcode credential, and wherein the second technology unit is configured to analyze at least one of a magnetic stripe credential, a wiegand swipe credential, a RF credential, a contact credential, a contactless credential, a proximity credential, a smart card credential, a barcode credential, a password credential, and a biometric credential.

4. The reader of one of the preceding claims, wherein the reader is capable of two-factor authentication.

5. The reader of one of the preceding claims, wherein at least one of the first and second technology units is integral to the mounting bracket or wherein at least one of the first and second technology units is selectively removable from the mounting bracket.

6. The reader of one of the preceding claims, further comprising:
a plurality of screw posts (24) adapted to secure the at least one selectively removable technology unit to the mounting bracket, wherein the plurality of screw posts are symmetrically positioned on the mounting bracket relative to first and second axes (H and V) of the at least one selectively removable technology unit;
at least one hook (26) adapted to retain the at least one selectively removable technology unit to the mounting bracket, wherein the at least one hook is positioned along at least one side of the mounting bracket;
at least one slide rail (28) adapted to align the at least one selectively removable technology unit with the mounting bracket, wherein the at least one slide rail is positioned along at least one side of the mounting bracket not having the at least one hook;
a plurality of mounting slots (30) configured to secure the reader to at least one of a structure or surface, wherein the plurality of mounting slots are capable of being oriented a plurality of directions; and
a recess (32) positioned to receive a portion of the at least one selectively removable technology unit.

7. The reader of one of the preceding claims, further comprising a feature activator (60) affixed to the mounting bracket, wherein the feature activator is adapted to connect to the at least one selectively removable technology unit wherein the feature activator is positioned on the mounting bracket such that it is symmetrical about first and second axes (H and V) of the at least one selectively removable technology unit such that depending on the orientation of the at least one selectively removable technology unit, the feature activator is in connection with the at least one selectively removable technology unit, wherein the first and second axes are orthogonally oriented wherein the feature activator is configured such that when the feature activator is in connection with the at least one selectively removable technology unit, the at least one selectively removable technology unit is activated, and when the feature activator is not in connection with the at least one selectively removable technology unit, the at least one selectively removable technology units is deactivated wherein the feature activator comprises a plurality of tamper posts (20), wherein the plurality of tamper posts are configured such that when the at least one selectively removable technology unit is connected to the mounting bracket, one of the plurality of tamper posts is connected with a tamper switch of the at least one selectively removable technology unit.

8. The reader of claim 7, wherein the feature activator is selectively removable from the mounting bracket, and wherein the feature activator is orientable between two positions such that the mounting bracket is operable to receive the at least one selectively removable technology unit in multiple relative orientations.

9. The reader of one of the preceding claims, wherein the mounting bracket further comprises a pathway between the first and second technology units such that the first and second technology units are in operable communication and, wherein the pathway comprises a cutout for receiving a wired connection and a wire retainer for securing the wire correction or wherein the pathway comprises a wireless communication link.

10. The reader of one of the preceding claims, wherein the first technology unit communicates with the second technology unit by at least one of a wire connection, a wireless connection, an optical connection, a RF connection, and a Bluetooth connection.

11. The reader of one of the preceding claims, wherein at least one of the first and second technology units comprises a light source (38) for providing feedback to a user.

12. The reader of one of the preceding claims, further comprising a third technology unit (80) configured to receive a third type of access credential and wherein at least one of the first, second, and third technology units is integral to the mounting bracket.

13. A transition access control system, comprising:
a reader as defined in one of the preceding claims.

14. The transition access control system of claim 13, wherein the mounting bracket comprises a feature activator that connects with a receptor associated with at least one of the plurality of technology units, wherein the feature activator comprises multiple members that are symmetrically positioned on the mounting bracket relative to first and second axes of at least one of the plurality of technology units, such that the connection is established notwithstanding the orientation of the at least one of the plurality of technology units, and wherein the feature activator is selectively removable from the mounting bracket, reorientable, and reattachable with the mounting bracket to connect with the at least one technology unit reoriented in a different position relative to the mounting bracket.

15. A method of reorienting an installed reader as claimed in claim 1, comprising:
removing the first technology unit positioned in a first orientation relative to a user from the mounting bracket;
reorienting the mounting bracket; and
reattaching the first technology unit to the mounting bracket in the same orientation as the first orientation relative to a user.

16. The method of claim 15, wherein the second technology unit is integral with the mounting plate.

17. The method of claim 15 or 16, wherein, when the first technology unit is reattached to the mounting bracket it is positioned in a different orientation relative to the mounting bracket than before it was removed.

18. The method of claim 15, 16 or 17, further comprising the steps of:
removing a feature activator from the mounting bracket;
reorienting the feature activator; and
reattaching the feature activator to the mounting bracket.

## Patentansprüche

1. Leser (10), aufweisend:
eine erste Technologie-Einheit (14), konfiguriert zum Analysieren eines ersten Typs von Zugangsdaten, wobei die erste Technologie-Einheit für automatisches Lesen von Daten von einer Karte konfiguriert ist;
eine zweite Technologie-Einheit (12), konfiguriert zum Analysieren eines zweiten Typs von Zugangsdaten; **gekennzeichnet durch**:
eine Montageplatte (16), konfiguriert für eine Aufnahme der ersten und zweiten Technologie-Einheiten in mehreren Richtungen derart, dass, wenn die zweite Technologie-Einheit in einer ersten Richtung eingebaut wird, die erste Technologie-Einheit sich neben einer ersten Seite der zweiten Technologie-Einheit befindet, und wenn die zweite Technologie-Einheit in einer zweiten Richtung eingebaut wird, die erste Technologie-Einheit sich neben einer zweiten Seite der zweiten Technologie-Einheit befindet.

2. Leser nach Anspruch 1, wobei die zweite Technologie-Einheit konfiguriert ist für den Empfang von einem maschinenlesbaren Identitätsausweis und/oder einem vom Anwender bereitgestellten Identitätsausweis.

3. Leser nach einem der vorhergehenden Ansprüche, wobei sich die von der ersten Technologie-Einheit benutzte Technologie von der von der zweiten Technologie-Einheit benutzten Technologie unterscheidet, wobei die erste Technologie-Einheit zum Analysieren von einem Magnetstreifen-Identitätsausweis, einem Wiegand-Swipe-Identitätsausweis, einem mit Funk übertragenen Identitätsausweis, einem via Kontakt übertragenen Identitätsausweis, einem berührungslos übertragenen Identitätsausweis, einem via Näherung übertragenen Identitätsausweis, einem via Smartcard übertragenen Identitätsausweis und/oder einem Strichcode-Identitätsausweis konfiguriert ist, und wobei die zweite Technologie-Einheit zum Analysieren von einem Magnetstreifen-Identitätsausweis, einem Wiegand-Swipe-Identitätsausweis, einem mit Funk übertragenen Identitätsausweis, einem via Kontakt übertragenen Identitätsausweis, einem berührungslos übertragenen Identitätsausweis, einem via Näherung übertragenen Identitätsausweis, einem via Smartcard übertragenen Identitätsausweis, einem Strichcode-Identitätsausweis, einem Passwort-Identitätsausweis und/oder einem biometrischen Identitätsausweis konfiguriert ist.

4. Leser nach einem der vorhergehenden Ansprüche, wobei der Leser die Fähigkeit zur Zwei-Faktor-Authentifizierung besitzt.

5. Leser nach einem der vorhergehenden Ansprüche, wobei die erste und/oder zweite Technologie-Einheit in die Montageplatte integriert sind oder wobei die erste und/oder zweite Technologie-Einheit wahlweise von der Montageplatte entfernbar sind.

6. Leser nach einem der vorhergehenden Ansprüche, ferner aufweisend:
mehrere Schraubenblöcke (24), die ausgeführt sind zur Sicherung von mindestens einer wahlweise entfernbaren Technologie-Einheit auf der Montageplatte, wobei die mehreren Schraubenblöcke auf der Montageplatte symmetrisch im Verhältnis zu ersten und zweiten Achsen (H und V) der mindestens einen wahlweise entfernbaren Technologie-Einheit positioniert sind;
mindestens einen Haken (26), der ausgeführt ist,
um mindestens eine wahlweise entfernbare Technologie-Einheit auf der Montageplatte zurückzuhalten, wobei der mindestens eine Haken entlang mindestens einer Seite der Montageplatte positioniert ist;
mindestens eine Gleitschiene (28), die ausgeführt ist, um die mindestens eine wahlweise entfernbare Technologie-Einheit auf die Montageplatte auszurichten, wobei die mindestens eine Gleitschiene entlang mindestens einer, nicht den mindestens einen Haken aufweisenden, Seite der Montageplatte positioniert ist;
mehrere Montageschlitze (30), die ausgeführt sind zur Sicherung des Lesers auf mindestens einem Aufbau oder einer Fläche, wobei sich die mehreren Montageschlitze in mehreren Richtungen anordnen lassen; und
eine Aussparung (32) in einer Positionierung zur Aufnahme mindestens eines Teils der mindestens einen wahlweise entfernbaren Technologie-Einheit.

7. Leser nach einem der vorhergehenden Ansprüche, ferner aufweisend:
einen Funktionsaktivator (60), angebracht an der Montageplatte, wobei der Funktionsaktivator ausgeführt ist für einen Anschluss an die mindestens eine wahlweise entfernbare Technologie-Einheit, wobei der Funktionsaktivator derart auf der Montageplatte positioniert ist, dass er auf solche Weise symmetrisch zu den ersten und zweiten Achsen (H und V) der mindestens einen wahlweise entfernbaren Technologie-Einheit ist, dass der Funktionsaktivator abhängig von der Richtung der mindestens einen wahlweise entfernbaren Technologie-Einheit in Verbindung mit der mindestens einen wahlweise entfernbaren Technologie-Einheit ist, wobei die ersten und zweiten Achsen orthogonal zueinander orientiert sind, wobei der Funktionsaktivator derart konfiguriert ist, dass, wenn der Funktionsaktivator in Verbindung mit der mindestens einen wahlweise entfernbaren Technologie-Einheit ist, die mindestens eine wahlweise entfernbare Technologie-Einheit aktiviert ist, und wenn der Funktionsaktivator nicht in Verbindung mit der mindestens einen wahlweise entfernbaren Technologie-Einheit ist, die mindestens eine wahlweise entfernbare Technologie-Einheit deaktiviert ist, wobei der Funktionsaktivator mehrere Druckstücke (20) aufweist, wobei die mehreren Druckstücke derart konfiguriert sind, dass, wenn die mindestens eine wahlweise entfernbare Technologie-Einheit mit der Montageplatte in Verbindung gebracht wird, eines der mehreren Druckstücke mit einem Druckschalter der mindestens einen wahlweise entfernbaren Technologie-Einheit in Verbindung gebracht wird.

8. Leser nach Anspruch 7, wobei der Funktionsaktivator wahlweise von der Montageplatte entfernbar ist, und wobei der Funktionsaktivator derart zwischen zwei Positionen orientierbar ist, die Montageplatte betreibbar ist für die Aufnahme der mindestens einen wahlweise entfernbaren Technologie-Einheit in mehreren zueinander relativen Orientierungen.

9. Leser nach einem der vorhergehenden Ansprüche, wobei die Montageplatte ferner einen Durchgang zwischen den ersten und zweiten Technologie-Einheiten derart aufweist, dass die ersten und zweiten Technologie-Einheiten in operabler Verbindung sind und, wobei der Durchgang einen Ausschnitt für die Aufnahme einer Kabelverbindung und einer Kabelhalterung zur Sicherung der Kabelverbindung aufweist oder wobei der Durchgang eine drahtlose Funkverbindung aufweist.

10. Leser nach einem der vorhergehenden Ansprüche, wobei die erste Technologie-Einheit mit der zweiten Technologie-Einheit über eine Kabelverbindung, eine drahtlose Verbindung, eine optische Verbindung, eine Funkverbindung und/oder eine Bluetooth-Verbindung kommuniziert.

11. Leser nach einem der vorhergehenden Ansprüche, wobei die erste und/oder zweite Technologie-Einheit eine Lichtquelle (38) zur Bereitstellung von Rückmeldung an einen Anwender aufweisen.

12. Leser nach einem der vorhergehenden Ansprüche, ferner aufweisend eine dritte Technologie-Einheit (80), die konfiguriert ist für den Empfang eines dritten Typs von Zugangsdaten, und wobei die erste, zweite und/oder dritte Technologie-Einheit in die Montageplatte integriert sind.

13. Übergangs-Zugangskontrollsystem, aufweisend:
einen Leser nach einem der vorhergehenden Ansprüche.

14. Übergangs-Zugangskontrollsystem nach Anspruch 13, wobei die Montageplatte einen Funktionsaktivator aufweist, der verbunden wird mit einem Aufnehmer, der mindestens einer der mehreren Technologie-Einheiten zugeordnet ist, wobei der Funktionsaktivator mehrere Elemente aufweist, die auf der Montageplatte symmetrisch relativ zu ersten und zweiten Achsen von mindestens einer der mehreren Technologie-Einheiten derart positioniert ist, dass die Verbindung unabhängig von der Orientierung der mindestens einen der mehreren Technologie-Einheiten hergestellt wird, und wobei der Funktionsaktivator wahlweise von der Montageplatte entfernbar, auf der Montageplatte neu orientierbar und wiederanbaubar ist für einen Anschluss an die mindestens eine Technologie-Einheit, die in einer unterschiedlichen Position relativ zur Montageplatte neu orientiert ist.

15. Verfahren zur Neuorientierung eines installierten Lesers nach Anspruch 1, aufweisend:
Entfernen der ersten, in einer ersten Orientierung im Verhältnis zu einem Anwender positionierten Technologie-Einheit von der Montageplatte;
Neuorientieren der Montageplatte; und
Wiederanbau der ersten Technologie-Einheit auf der Montageplatte in der gleichen Orientierung im Verhältnis zu einem Anwender wie der ersten Orientierung.

16. Verfahren nach Anspruch 15, wobei die zweite Technologie-Einheit in die Montageplatte integriert ist.

17. Verfahren nach Anspruch 15 oder 16, wobei, wenn die erste Technologie-Einheit wieder an der Montageplatte angebaut wird, sie in einer unterschiedlichen Orientierung relativ zur Montageplatte positioniert wird als vor ihrem Entfernen.

18. Verfahren nach Anspruch 15, 16 oder 17, ferner folgende Schritte aufweisend:
Entfernen eines Funktionsaktivators von der Montageplatte;
Neuorientieren des Funktionsaktivators; und
Wiederanbau des Funktionsaktivators an der Montageplatte.

## Revendications

1. Lecteur (10) comportant :
une première unité technologique (14) configurée pour analyser un premier type de justificatif d'accès, la première unité technologique étant configurée pour lire automatiquement des données à partir d'une carte : une deuxième unité technologique (12) configurée pour analyser un deuxième type de justificatif d'accès ; **caractérisé par** :
un support (16) de montage configuré pour recevoir les première et deuxième unités technologiques dans une pluralité d'orientations de telle façon que, lorsque la deuxième unité technologique est montée dans une première orientation, la première unité technologique soit adjacente à un premier côté de la deuxième unité technologique et que, lorsque la deuxième unité technologique est montée dans une deuxième orientation,
la première unité technologique soit adjacente à un deuxième côté de la deuxième unité technologique.

2. Lecteur selon la revendication 1, la deuxième unité technologique étant configurée pour recevoir un justificatif lisible par une machine et / ou un justificatif fourni par un utilisateur.

3. Lecteur selon l'une des revendications précédentes, la technologie utilisée par la première unité technologique étant différente de la technologie utilisée par la deuxième unité technologique, la première unité technologique étant configurée pour analyser un justificatif sur bande magnétique, un justificatif Wiegand à défilement, un justificatif RF, un justificatif par contact, un justificatif sans contact, un justificatif de proximité, un justificatif sur carte à puce et / ou un justificatif sous forme de code-barres, et la deuxième unité technologique étant configurée pour analyser un justificatif sur bande magnétique, un justificatif Wiegand à défilement, un justificatif RF, un justificatif par contact, un justificatif sans contact, un justificatif de proximité, un justificatif sur carte à puce, un justificatif sous forme de code-barres, un justificatif sous forme de mot de passe et / ou un justificatif biométrique.

4. Lecteur selon l'une des revendications précédentes, le lecteur étant capable d'effectuer une authentification à deux facteurs.

5. Lecteur selon l'une des revendications précédentes, au moins une des première et deuxième unités technologiques étant incorporée au support de montage ou au moins une des première et deuxième unités technologiques pouvant être sélectivement démontée du support de montage.

6. Lecteur selon l'une des revendications précédentes, comportant en outre :
une pluralité de tenons (24) à vis conçus pour fixer l'unité ou les unités technologiques sélectivement amovibles au support de montage, la pluralité de tenons à vis étant positionnée symétriquement sur le support de montage par rapport à des premier et deuxième axes (H et V) de l'unité ou des unités technologiques sélectivement amovibles ;
au moins un crochet (26) conçu pour retenir l'unité ou
les unités technologiques sélectivement amovibles sur le support de montage, le ou les crochets étant positionnés le long d'au moins un côté du support de montage ;
au moins un rail (28) de glissement conçu pour aligner l'unité ou les unités technologiques sélectivement amovibles avec le support de montage, le ou les rails de glissement étant positionnés le long d'au moins un côté du support de montage ne comportant pas le ou les crochets ;
une pluralité de rainures (30) de montage configurée pour fixer le lecteur à une structure et / ou une surface, la pluralité de rainures de montage étant susceptible d'être orientée dans une pluralité de directions ; et
un évidement (32) positionné pour recevoir une partie de l'unité ou des unités technologiques sélectivement amovibles.

7. Lecteur selon l'une des revendications précédentes, comportant en outre un activateur (60) de fonctionnalités apposé sur le support de montage, l'activateur de fonctionnalités étant conçu pour se connecter à l'unité ou aux unités technologiques sélectivement amovibles, l'activateur de fonctionnalités étant positionné sur le support de montage de façon à être symétrique par rapport aux premier et deuxième axes (H et V) de l'unité ou des unités technologiques sélectivement amovibles de telle façon que, suivant l'orientation de l'unité ou des unités technologiques sélectivement amovibles, l'activateur de fonctionnalités soit en liaison avec l'unité ou les unités technologiques sélectivement amovibles, les premier et deuxième axes étant orientés orthogonalement, l'activateur de fonctionnalités étant configuré de telle façon que, lorsque l'activateur de fonctionnalités est en liaison avec l'unité ou les unités technologiques sélectivement amovibles, l'unité ou les unités technologiques sélectivement amovibles soient activées et que, lorsque l'activateur de fonctionnalités n'est pas en liaison avec l'unité ou les unités technologiques sélectivement amovibles, l'unité ou les unités technologiques sélectivement amovibles soient désactivées, l'activateur de fonctionnalités comportant une pluralité de tenons (20) d'altération, la pluralité de tenons d'altération étant configurée de telle façon que, lorsque l'unité ou les unités technologiques sélectivement amovibles sont reliées au support de montage, un tenon parmi la pluralité de tenons d'altération soit en liaison avec un interrupteur d'altération de l'unité ou des unités technologiques sélectivement amovibles.

8. Lecteur selon la revendication 7, l'activateur de fonctionnalités pouvant être sélectivement démonté du support de montage, et l'activateur de fonctionnalités étant orientable entre deux positions de telle façon que le support de montage puisse être utilisé pour recevoir l'unité ou les unités technologiques sélectivement amovibles dans des orientations relatives multiples.

9. Lecteur selon l'une des revendications précédentes, le support de montage comportant en outre un passage entre les première et deuxième unités technologiques de telle façon que les première et deuxième unités technologiques soient en communication fonctionnelle, et le passage comportant une découpe servant à recevoir une liaison filaire et une attache de fil servant à immobiliser la liaison filaire ou le passage comportant une liaison de communication sans fil.

10. Lecteur selon l'une des revendications précédentes, la première unité technologique communiquant avec la deuxième unité technologique par une liaison filaire, une liaison sans fil, une liaison optique, une liaison RF et / ou une liaison Bluetooth.

11. Lecteur selon l'une des revendications précédentes, au moins une des première et deuxième unités technologiques comportant une source lumineuse (38) servant à présenter un retour d'information à un utilisateur.

12. Lecteur selon l'une des revendications précédentes, comportant en outre une troisième unité technologique (80) configurée pour recevoir un troisième type de justificatif d'accès et au moins une des première, deuxième et troisième unités technologiques étant incorporée au support de montage.

13. Système de contrôle d'accès de transition, comportant :
un lecteur tel que défini dans l'une des revendications précédentes.

14. Système de contrôle d'accès de transition selon la revendication 13, le support de montage comportant un activateur de fonctionnalités qui se raccorde à un récepteur associé à au moins une unité de la pluralité d'unités technologiques, l'activateur de fonctionnalités comportant des éléments multiples positionnés symétriquement sur le support de montage par rapport à des premier et deuxième axes d'au moins une unité de la pluralité d'unités technologiques, de telle façon que la liaison soit établie indépendamment de l'orientation de l'unité ou des unités de la pluralité d'unités technologiques, et l'activateur de fonctionnalités pouvant être sélectivement démonté du support de montage, réorienté, et remonté sur le support de montage pour se raccorder à l'unité ou aux unités technologiques en étant réorienté dans une position différente par rapport au support de montage.

15. Procédé de réorientation d'un lecteur installé tel que revendiqué dans la revendication 1, comportant les étapes consistant à :
démonter du support de montage la première unité technologique positionnée dans une première orientation par rapport à un utilisateur ;
réorienter le support de montage ; et
remonter la première unité technologique sur le support de montage dans la même orientation que la première orientation par rapport à un utilisateur.

16. Procédé selon la revendication 15, la deuxième unité technologique étant incorporée à la plaque de montage.

17. Procédé selon la revendication 15 ou 16, **caractérisé en ce que**, lorsque la première unité technologique est remontée sur le support de montage, elle est positionnée dans une orientation par rapport au support de montage différente de celle qu'elle avait avant d'être démontée.

18. Procédé selon la revendication 15, 16 ou 17, comportant en outre les étapes consistant à :
démonter un activateur de fonctionnalités du support de montage ;
réorienter l'activateur de fonctionnalités ; et
remonter l'activateur de fonctionnalités sur le support de montage.
